# DEMANDE DE BREVET EUROPEEN

(11) **EP 4 764 794 A1**
(43) Date de publication de la demande: **24.06.2026**
(21) Numéro de dépôt: 25223307.7
(22) Date de dépôt: 15.12.2025
(51) Int. Cl.: G06F 3/01, G06F 3/0354, G06F 3/041, G06F 3/044, G06F 3/0488, G06F 3/04886

(54) **INTERFACE HAPTIQUE À COUPLAGE D'EFFETS**

(30) Priorité: 18.12.2024 FR 2414513
(71) Demandeur: Commissariat à l'Energie Atomique et aux Energies Alternatives, 75015 Paris (FR)
(72) Inventeur: GOUBAULT, Théotime, 38054 GRENOBLE CEDEX 09 (FR); CASSET, Fabrice, 38054 GRENOBLE CEDEX 09 (FR)
(74) Mandataire: Regimbeau

(57) **Abrégé**

L'invention concerne une interface haptique, comprenant une structure haptique définissant une surface tactile susceptible d'être touchée par un utilisateur, la structure haptique comprenant une plaque comprenant une surface inférieure et une surface supérieure susceptible d'être touchée par un utilisateur ; au moins un actionneur piézoélectrique de Lamb couplé à la plaque et configuré pour faire vibrer la plaque à un mode de vibration dit de Lamb, la vibration étant apte à se propager dans la plaque pour faire vibrer la plaque de manière uniforme, la vibration selon un mode de Lamb présentant des zones de vibration maximales et des zones d'amplitude nulle, des lignes nodales étant définies sur la plaque (2) où l'amplitude des vibrations est minimale ; une matrice d'actionneurs piézoélectriques non rayonnants couplée à la plaque, chaque actionneur piézoélectrique non rayonnant de la matrice étant configuré pour générer de manière sélective et localisée une déformation de la plaque.

## Description

### DOMAINE TECHNIQUE

L'invention concerne le domaine des interfaces homme-machine, et plus particulièrement celles produisant des effets haptiques.

### ETAT DE LA TECHNIQUE

Une interface haptique permet à l'utilisateur d'interagir avec l'environnement par le sens du toucher. L'effet haptique est aujourd'hui utilisé dans de nombreuses applications, par exemple sur un Smartphone (en français, téléphone intelligent) lorsque celui-ci génère une légère vibration lorsqu'un utilisateur appuie sur une touche affichée à l'écran pour simuler l'impression d'appuyer sur un bouton par exemple.

Avec l'émergence des dalles tactiles (capacitives ou résistives), les applications haptiques se sont multipliées.

Cette technologie peut permettre par exemple une meilleure immersion dans les jeux vidéo. Elle peut permettre de faciliter les achats de vêtements sur internet, avec la possibilité de les toucher virtuellement à l'aide d'un ordinateur. Le domaine des Smartphones ou des tablettes PC est également concerné, avec la possibilité d'ajouter des touches ou claviers virtuels.

L'haptique est pertinente dans le cadre de la formation médicale, des industries dangereuses (manipulation chimique ou nucléaire). On peut également citer l'automobile comme champ d'application important, avec la possibilité d'introduire des boutons haptiques sur le tableau de bord. Ainsi, le conducteur pourrait avoir une information haptique lui confirmant une action sur le tableau de bord, tout en gardant son attention sur la route...

Il est connu de générer des effets haptiques utilisant des actionneurs piézoélectriques qui génèrent des modes de vibration ou assurent la propagation d'une onde ultrasonore dans l'interface.

De tels effets sont soit générés en faisant vibrer toute l'interface et dans ce cas l'effet est le même partout et donc dit en anglais « single touch » (si on met plusieurs doigts ils vont tous ressentir la même chose). Dans ce cas on va pouvoir faire un effet continu mais on ne pourra ressentir que le même effet sur toute l'interface à un temps t donné.

Soit l'effet est localisé et dans ce cas il peut être, dit en anglais « multi touch » et localement, chaque doigt va ressentir potentiellement un effet différent. L'effet est dans ce cas localisé, et pour être continu, l'interface doit soit piloter à chaque instant une matrice d'actionneur pré calibrés pour générer un effet adapté sous les doigts qui se déplacent soit être pourvue d'un très grand nombre d'actionneurs piézoélectriques, ce qui pose des problèmes d'intégration.

### EXPOSE DE L'INVENTION

L'invention propose de pallier au moins un de ces inconvénients.

A cet effet, l'invention propose, selon un premier aspect, une interface haptique, comprenant :
- une structure haptique définissant une surface tactile susceptible d'être touchée par un utilisateur, la structure haptique comprenant
- une plaque comprenant une surface inférieure et une surface supérieure susceptible d'être touchée par un utilisateur ;
- au moins un actionneur piézoélectrique de Lamb couplé à la plaque et configuré pour faire vibrer la plaque à un mode de vibration dit de Lamb, la vibration étant apte à se propager dans la plaque pour faire vibrer la plaque de manière uniforme, la vibration selon un mode de Lamb présentant des zones de vibration maximales et des zones d'amplitude nulle, des lignes nodales étant définies sur la plaque où l'amplitude des vibrations est minimale ;
- une matrice d'actionneurs piézoélectriques non rayonnants couplée à la plaque, chaque actionneur piézoélectrique non rayonnant de la matrice étant configuré pour générer de manière sélective et localisée une déformation de la plaque ; les actionneurs piézoélectriques non rayonnants étant répartis sur la surface inférieure de la plaque de manière à ne pas perturber la vibration du mode Lamb;
- une unité de commande configurée pour produire et envoyer des signaux aux actionneurs non rayonnants piézoélectriques et à l'actionneur piézoélectrique de Lamb en fonction d'un effet haptique à obtenir de manière à obtenir un effet haptique par une modulation du coefficient de frottement localisé.

L'invention est avantageusement complétée par les caractéristiques suivantes, prises seules ou en une quelconque de leur combinaison techniquement possible :
- Les actionneurs piézoélectriques non rayonnants sont répartis sur la surface inférieure de manière à être disposés sur des lignes nodales du mode de Lamb généré.

Les actionneurs piézoélectriques non rayonnants occupent une surface ayant une largeur prise entre deux ventres de la vibration du mode de Lamb inférieure à une demi-longueur d'onde du mode de vibration de Lamb.

Les actionneurs piézoélectriques non rayonnants sont répartis sur la surface inférieure de manière à être disposés sur des lignes antinodales du mode de Lamb généré, les actionneurs piézoélectriques non rayonnants présentant une largeur prise dans le sens de propagation de la vibration supérieure ou égale à une demi-longueur d'onde du mode de vibration de Lamb.

Deux actionneurs piézoélectriques non rayonnants sont espacés d'une distance supérieure à la taille d'un doigt comprise entre 0,5 et 2 cm bord à bord et d'une distance centre à centre qui un multiple d'une demi-longueur d'onde.

Les actionneurs piézoélectriques non rayonnants sont circulaires ou hexagonaux.

Les actionneurs piézoélectriques non rayonnants sont disposés à une distance supérieure ou égale à une demi-longueur d'onde d'un actionneur piézoélectrique de Lamb.

L'invention propose, selon un deuxième aspect un procédé pour générer au moins un effet haptique capable d'être ressenti par un utilisateur en contact avec une interface haptique selon le premier aspect de l'invention, comprenant les étapes suivantes :
- détecter au moins une position d'au moins un contact d'un utilisateur sur la surface de la plaque ;
- envoyer au moins un signal de commande aux actionneurs piézoélectriques et de Lamb en fonction de la ou les position(s) détectée(s) pour faire vibrer de manière uniforme la plaque selon un mode de Lamb et de manière localisée par au moins un actionneur piézoélectrique.

Le procédé selon le deuxième aspect est tel que la vibration selon un mode de Lamb et la vibration des actionneurs piézoélectriques génèrent une variation du coefficient de frottement perceptible tactilement par un utilisateur déplaçant son doigt sur la surface de la plaque.

Le procédé selon le deuxième aspect est tel que le signal de commande est configuré pour que la plaque vibre uniformément selon un mode de Lamb a une amplitude supérieure à quelques 100 nm de préférence comprise entre 100nm et 2µm, ou entre 100nm et 1µm.

Les avantages de l'invention sont multiples.

L'interface haptique permet de générer un effet haptique par la modulation du coefficient de frottement obtenu par le couplage d'un mode de Lamb et d'ondes non rayonnantes.

L'utilisation d'un mode de Lamb permet de générer un effet continu sur toute l'interface. Dans ce cas toute la surface vibre de façon identique et donc propose le même ressenti de manière uniforme.

L'utilisation d'ondes non rayonnantes permet de générer un ou plusieurs effets localisés à proximité des actionneurs. Dans ce cas, il est possible de générer un effet « multi touch » différent pour chaque doigt en contact avec la plaque.

Dans un mode de réalisation particulier, le positionnement des actionneurs piézoélectriques non rayonnants sur des lignes nodales permet en actionnant à la fois un ou plusieurs actionneur(s) piézoélectrique(s) non rayonnant(s) et au cours de la vibration uniforme de la plaque d'avoir un effet continu sur la plaque tout en permettant le « multi touch ».

Dans l'interface de l'invention, les effets haptiques obtenus par ondes non rayonnantes sont discrets, et avec une faible résolution (pour éviter d'avoir une densité trop importante d'actionneurs non rayonnants qui pose un problème d'intégration), qui est compensée par un effet obtenu en utilisant un mode de Lamb stationnaire pour assurer des effets haptiques continus sur l'interface.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre une vue de côté d'une interface haptique selon un mode de réalisation ;
La figure 2 illustre une vue de dessus d'une interface haptique selon un mode de réalisation ;
La figure 3 illustre plusieurs dispositions d'actionneurs piézoélectriques dit de Lamb autour d'une plaque apte à vibrer selon un mode de vibration de Lamb ;
La figure 4 illustre un arrangement possible d'actionneurs piézoélectriques dit de Lamb ;
La figure 5 illustre l'influence de la position des actionneurs non rayonnants sur le mode de Lamb ;
La figure 6 illustre plusieurs états de vibrations selon un mode de Lamb ;
La figure 7 illustre des étapes d'un procédé de génération d'au moins un effet haptique au moyen de l'interface objet du présent exposé ;
La figure 8 illustre un fonctionnement possible de l'interface objet du présent exposé.

Sur l'ensemble des figures les éléments similaires portent des références identiques.

### DESCRIPTION DETAILLEE

### Présentation générale de l'interface haptique

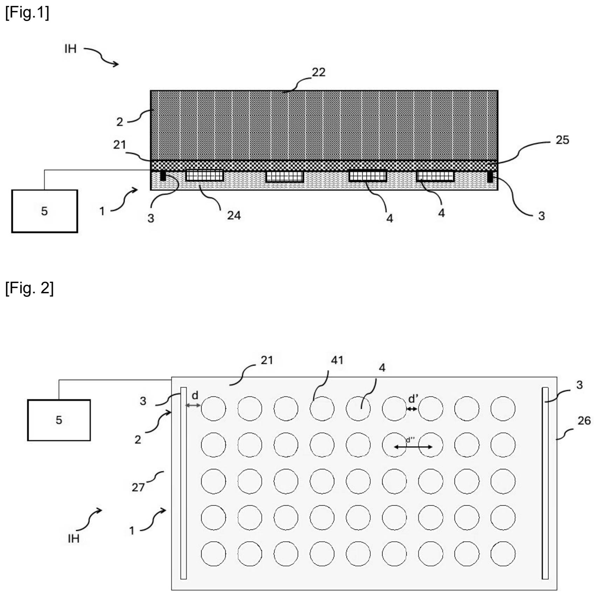

Les figures 1 et 2 illustrent une vue en coupe et une vue de face d'une interface haptique IH selon un mode de réalisation de l'invention.

L'interface haptique IH comprend une structure haptique 1 comprenant une plaque 2 définissant une surface tactile susceptible d'être touchée par un utilisateur. Une telle plaque 2 est par exemple un écran et est de préférence rectangulaire ou carrée. La surface 2 comprend une surface inférieure 21 et une surface supérieure 22. L'écran est par exemple un écran OLED.

L'interface haptique comprend des actionneurs piézoélectriques, de deux types, qui permettent de 1) faire vibrer la plaque 2 selon un mode de résonnance dit de Lamb, 2) générer de manière sélective et localisée une déformation de la plaque 2 au moyen de modes de vibrations à des fréquences non rayonnantes.

L'interface haptique comprend à ce titre au moins un actionneur piézoélectrique de Lamb 3 (ci-après actionneur de Lamb) et au moins un actionneur piézoélectrique non rayonnant 4 (ci-après actionneur non rayonnant). Les actionneurs piézoélectriques 3, 4 sont disposés sous la surface inférieure 21 de la plaque 2/écran.

L'idée de l'invention est de coupler deux types de vibrations pour générer un effet haptique complexe qui combine deux principes haptiques : celui de la modulation du coefficient de frottement à partir d'un mode de Lamb qui produit un effet continu mais qui est le même sur toute l'interface (effet « single touch », en anglais) et celui des ondes non rayonnantes qui génèrent un ou plusieurs effets discrets sur la plaque (effet « multi touch », en anglais). La combinaison de ces deux effets permet de générer des effets haptiques localisés, multi touch tout en ayant un effet continu.

Il est alors possible d'obtenir une modulation du coefficient de frottement de manière localisée. Cette modulation du coefficient de frottement de manière localisée est permise par les ondes non rayonnantes seulement. Le mode de Lamb généré par les actionneurs de Lamb 3 ajoute du contraste au besoin et permet de combler les zones mortes entre deux actionneurs non rayonnant 4. Donc d'avoir un effet perçu comme continu tout en diminuant la densité d'actionneurs NR ce qui a beaucoup d'avantages.

Une unité de détection de la position des doigts de l'utilisateur avec l'interface est aussi prévue. Celle-ci peut être formée par les actionneurs piézoélectriques (non rayonnant ou de Lamb) ou bien par une interface de captation capacitive éventuellement incluse dans la plaque 2/ écran.

Une unité de commande 5 est connectée à chaque actionneur de Lamb 3 et à chaque actionneur non rayonnant 4 au moyen de pistes métalliques (non visibles) et le cas échéant à l'unité de détection de la position des doigts. L'unité de commande 5 génère et envoie les signaux aptes à actionner chaque actionneur piézoélectrique 3, 4 et assure ainsi le pilotage de l'interface haptique 1. L'unité de commande 5 est configurée pour permettre un actionnement à haute fréquence (typiquement à plusieurs dizaines de kHz voire plusieurs centaines de kHz pour les actionneurs de Lamb, et au moins plusieurs centaines de kHz pour les actionneurs non rayonnants voire plusieurs dizaines de khz) et optionnellement une modulation en amplitude de ce signal pour produire un effet perceptible par un utilisateur. Les actionneurs de Lamb 3 n'ont pas besoin d'être indépendants mais les actionneurs non rayonnants 4 doivent pouvoir être actionnés indépendamment.

La plaque 2 est de préférence rectangulaire et s'agissant d'un écran elle permet d'afficher des images pour améliorer l'expérience d'utilisation de l'interface haptique ici décrite.

De manière optionnelle, les actionneurs piézoélectriques 3, 4 sont disposés sur une couche de passivation 24 et éventuellement sous une feuille polymère 25 entre les actionneurs piézoélectriques et la surface inférieure 21 de la plaque 2.

### Actionneur piézoélectrique de Lamb 3

Au moins un actionneur piézoélectrique de Lamb 3 est couplé à la plaque 2 et est configuré pour faire vibrer la plaque 2/écran/cover selon un mode de résonance dit de Lamb. De manière connue, des modes Lamb sont présents dans les solides dès lors qu'une dimension est beaucoup plus petite que les deux autres. Le profil des modes de Lamb antisymétriques sont utilisés pour générer un effet haptique par variation de frottement (c'est-à-dire pour des fréquences de vibration supérieures ou égales à 20 kHz avec des amplitudes supérieures ou égales à 1 µm). En exploitant une résonance on maximise l'amplitude de déplacement par rapport à l'énergie utilisée pour initier le mouvement. Ainsi, au moins un actionneur de Lamb 3 est commandé pour générer des vibrations selon un mode de Lamb apte à se propager au travers de la plaque 2 de manière uniforme sur toute sa surface 21. Chaque actionneur de Lamb 3 est disposé sous la surface inférieure 21 de la plaque 2 / écran. De manière connue, les ondes de Lamb présentent des zones de vibration d'amplitude maximale (ventres) et des zones d'amplitude nulle ou quasi nulle (nœud). De la sorte, il est possible de définir des lignes antinodales sur la surface inférieure 21 de la plaque 2 où l'amplitude des vibrations est maximale. A l'inverse des lignes nodales sont des lignes où l'amplitude des vibrations de la plaque 2 est quasi nulle voire nulle (en tout état de cause minime par rapport à l'amplitude maximale).

Pour générer une vibration selon un mode de Lamb, l'interface haptique comprend au moins un actionneur de Lamb 3 rectangulaire disposé le long d'au moins un côté 26, 27 de la plaque 2 (le long du petit côté du rectangle) sous sa surface inférieure 21.

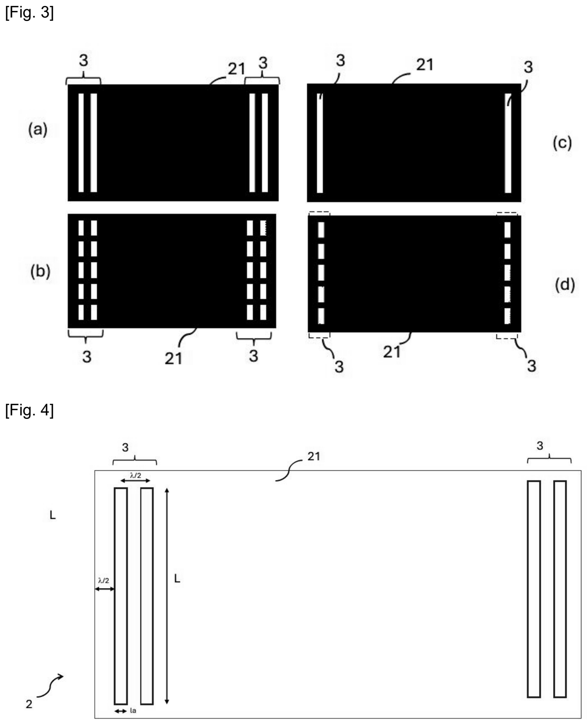

La figure 3 illustre plusieurs possibilités pour positionner au moins un actionneur de Lamb 3 :
(a) deux actionneurs de Lamb 3 rectangulaires disposés de part et d'autre de la plaque 2
(b) deux colonnes de cinq actionneurs de Lamb 3 rectangulaires de part et d'autre de la plaque 2
(c) un actionneur de Lamb 3 rectangulaire disposés de part et d'autre de la plaque 2
(d) une colonne de cinq actionneurs de Lamb 3 rectangulaire de part et d'autre de la plaque 2.

De manière préférée, des « grand » rectangles sont à privilégier comme pour les configurations (a) et (c) ci-dessus.

Également de manière préférée, l'actionneur de Lamb 3 fait toute la largeur de la plaque.

Comme illustré sur la figure 4, l'actionneur de Lamb 3 est positionné à une demi-longueur d'onde du bord de la plaque de sorte à être sur un ventre de vibration et dans la configuration avec 4 actionneurs (2 x 2 colonnes) ils sont distants d'une demi-longueur d'onde (c'est-à-dire en en opposition de phase). De manière alternative, ils peuvent être distants d'une longueur d'onde du bord de la plaque pour être en phase, mais au détriment de surface utile pour les actionneurs non rayonnants 4.

Pour optimiser le déplacement produit par les actionneurs de Lamb 3, la largeur d'actionneur « la » doit être inférieure à une demi-longueur d'onde, afin d'optimiser son efficacité. Pour un mode de Lamb possédant une longueur d'onde de 14mm (par exemple sur une plaque rectangulaire de 127 par 70 mm², d'épaisseur 0.7mm, en considérant un mode de Lamb à 36 kHz), « la » doit être inférieure à 7mm, donc par exemple comprise entre 2 et 6 mm, et de préférence 5 mm pour optimiser le ratio surface/déplacement.

Selon un mode de réalisation, les actionneurs de Lamb 3 permettent de générer, par exemple, un mode de Lamb à 36 kHz correspondant à une longueur d'onde de 14 mm. Cette fréquence est compatible avec la génération d'un effet haptique. Mais pour générer un effet haptique en utilisant un mode de Lamb il est connu d'utiliser des modes à une fréquence allant de 20 kHz jusqu'à plusieurs centaines de kHz, typiquement 100 kHz. Dans ce cas, les longueurs d'onde correspondantes seront de 5 mm à 20 mm, et pour la continuité de l'effet on choisira des longueurs d'onde inférieures à 20 mm. Des fréquences élevées, de plusieurs dizaines de kHz, jusqu'à quelques centaines de kHz, typiquement 200 à 300kHz, sont à préférer car l'intensité de la modification du coefficient de frottement dépend de la fréquence. (On peut se référer à ce titre au document suivant qui souligne le fait que l'augmentation de la fréquence induit une augmentation de l'intensité de l'effet : F. Giraud, T. Hara, C. Giraud-Audine, M. Amberg, B. Lemaire-Semail, et M. Takasaki, « Evaluation of a friction reduction based haptic surface at high frequency », in 2018 IEEE Haptics Symposium (HAPTICS), mars 2018, p. 210-215. doi: 10.1109/HAPTICS.2018.8357178.).

De manière complémentaire, pour être perceptible par l'utilisateur, le signal d'actionnement du mode de Lamb est modulé à basse fréquence, de 10 à 1000 Hz. De manière complémentaire, en fonction de la sensation souhaitée, on peut préférer les fréquences allant de 250 à 350 Hz représentant le domaine fréquentiel où la sensibilité est maximale pour le doigt.

### Actionneurs piézoélectriques non rayonnants 4

Une matrice d'actionneurs non rayonnants 4 est couplée à la plaque 2. Chaque actionneur non rayonnant 4 est disposé sous la surface 21 inférieure de la plaque 2 / écran et est configuré pour générer de manière sélective et localisée une déformation de la plaque 2. En particulier, l'actionneur non rayonnant 4 déforme la plaque 2 dans sa zone d'effet définie par sa taille. Par exemple sur la figure 2, l'actionneur non rayonnant 4 est adapté pour déformer la plaque 2 au niveau de la surface délimitée par un cercle.

Chaque actionneur non rayonnant 4 est de préférence collé à la surface inférieure 21 de la plaque 2 et produit des forces radiales ponctuelles sur son bord 41 extérieur. Ces forces radiales donnent naissance à des modes de vibration dans la plaque 2. Certains modes de vibrations générés dans la plaque 2 s'atténuent très rapidement de manière exponentielle en s'éloignant radialement de la source. Ces modes appartiennent à ces domaines fréquentiels « fréquences non-rayonnantes ». En excitant un actionneur non rayonnant 4 à une fréquence non rayonnante on parvient à localiser la sensation dans un court rayon autour de l'actionneur piézoélectrique non rayonnant 4.

En pavant la surface supérieure 21 de la plaque 2 par une matrice d'actionneurs non rayonnants 4, une sensation haptique localisée sur une grande surface est ainsi obtenue.

De manière avantageuse, la distance maximale entre deux actionneurs non rayonnant 4 prise bords à bords 41, notée d'sur la figure 2, correspond à la taille d'un doigt, à savoir environ 1 cm (largeur approximative d'un doigt). La distance « d" » prise centre-à-centre est supérieure ou égale à une demi-longueur d'onde et est un multiple de la demi-longueur d'onde du mode de Lamb.

Une telle distance est définie en relation avec des questions d'intégration, de connectique ou de continuité de la sensation haptique.

Les actionneurs non rayonnants 4 sont dimensionnés par rapport au profil du mode de Lamb pour ne pas perturber le mode de Lamb.

Selon un mode de réalisation préféré, l'actionneur non rayonnant 4 présente une largeur maximale entre deux ventres de la vibration du mode Lamb inférieure à une demi-longueur d'onde du mode de vibration de Lamb (typiquement inférieure ou égale à 2/5 de la longueur d'onde). Dans ce cas, les actionneurs piézoélectriques non rayonnants 4 sont répartis de manière à être disposés sur des lignes nodales LN du mode de Lamb généré. C'est-à-dire sur des minimums d'amplitude là où les contraintes sont les plus faibles, afin de perturber le moins possible le mode de Lamb.

Autrement dit, les actionneurs non rayonnants 4 sont dimensionnés par rapport au profil du mode de Lamb pour que leur périphérie soit toujours à distance des lignes antinodales (ou des ventres) là où l'amplitude de la vibration du mode de Lamb est maximale. En effet, il s'agit de perturber le moins possible la vibration selon le mode de Lamb. Ainsi, pour assurer la continuité de l'effet haptique les actionneurs non rayonnants 4 sont positionnés le long des lignes nodales sans que les bords ne touchent des lignes antinodales. Ils sont à une distance (d sur la figure 2) configurée pour laisser le front d'onde de la vibration selon le mode de Lamb se constituer.

Selon un deuxième mode de réalisation, chaque actionneur non rayonnant 4 présente une largeur maximale prise dans le sens de propagation de la vibration supérieure ou proche d'une demi-longueur d'onde du mode de vibration de Lamb (à partir de 2/5 de la longueur d'onde jusqu'à une longueur d'onde au maximum). Selon ce mode de réalisation, les actionneurs piézoélectriques non rayonnants 4 sont répartis sur la surface inférieure 21 de manière à être disposés sur des lignes antinodales LA du mode de Lamb généré.

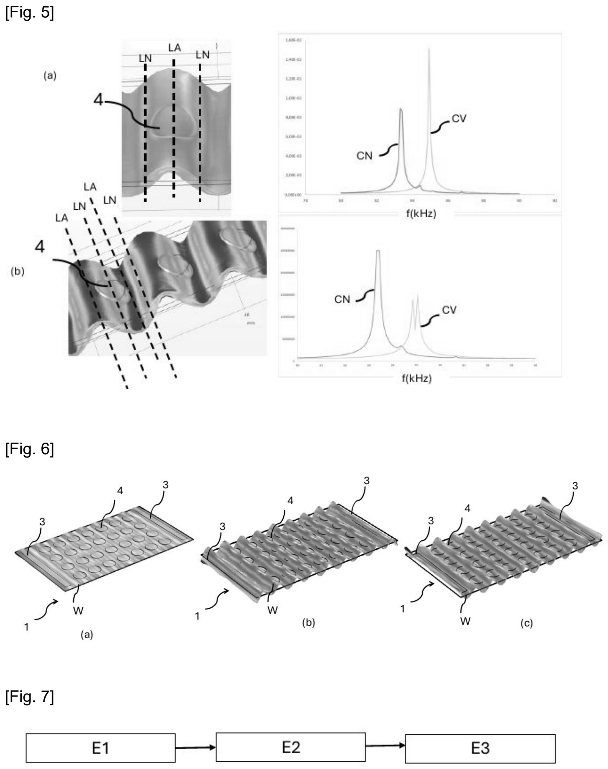

La figure 5 illustre (a) l'effet du positionnement d'un actionneur non rayonnant 4 le long d'une ligne antinodale LA et (b) l'effet du positionnement d'un actionneur non rayonnant 4 le long d'une ligne nodale LN pour un actionneur non rayonnant 4 ayant un diamètre proche d'une demi longueur d'onde (sur la figure la longueur d'onde est 8,88mm et le diamètre est 4mm donc le diamètre est environ 45% de la longueur d'onde). On remarque des courbes à droite montrant l'amplitude de la vibration au niveau du ventre (courbe CV) et l'amplitude de la vibration de l'amplitude de la vibration au niveau du nœud (CN), on voit dans ce cas où on a un diamètre inférieur mais proche d'une demi longueur d'onde du mode de Lamb et que l'actionneur non rayonnant 4 est positionné le long d'une ligne antinodale LA, l'amplitude de la vibration au niveau du ventre est moins perturbée par l'actionneur non rayonnant 4 que lorsqu'il est placé sur une ligne nodale. Comme indiqué sur cette figure 5 on voit que si l'actionneur déborde sur un ventre de vibration, il va y avoir l'apparition de concentration de contrainte du fait de l'amplitude de vibration du mode de Lamb au niveau de la périphérie de l'actionneur non rayonnant 4.

Quel que soit le mode de réalisation, les actionneurs non rayonnants doivent être le plus fin possible pour rigidifier le moins possible la plaque 2. L'épaisseur des actionneurs non rayonnants est comprise entre 2 µm et 300 µm préférentiellement autour de 50 µm. Cette épaisseur dépend du matériau de la plaque 2, du matériau des actionneurs, de leur rayon et de la longueur d'onde du mode de Lamb utilisé. De manière générale pour rester dans le cadre de la théorie des plaques décrivant le mode de Lamb, il faut que l'épaisseur totale (plaque et actionneurs) soit négligeable par rapport aux autres dimensions. Il n'y a à priori pas de lien entre l'épaisseur des actionneurs de Lamb et l'épaisseur des actionneurs non rayonnants. L'épaisseur des actionneurs de Lamb est par ailleurs, de préférence, comprise entre 2 µm et 500 µm.

De préférence les actionneurs non rayonnants 4 sont distants d'une distance « d » au moins égale à une demi-longueur d'onde λ/2 des actionneurs de Lamb 3.

A titre d'exemple, les actionneurs non rayonnants 4 doivent être le plus petit possible, idéalement ayant une dimension planaire allant d'un diamètre (ou coté) de 1 mm à 1,4 cm, préférentiellement de 5 mm à 1 cm.

La figure 6 illustre des vibrations W propagées sur la plaque 2 par deux actionneurs de Lamb 3.

Un actionneur non rayonnant 4 peut prendre plusieurs formes : circulaire ou hexagonale.

Dans un mode de réalisation préféré, l'interface haptique comprend des actionneurs non rayonnants 4 de diamètre 1 cm correspondant à une fréquence non rayonnante à 120 kHz dans le cas où la plaque 2 est un écran en verre OLED.

On relèvera que les fréquences non rayonnantes dépendent beaucoup du matériau, de l'épaisseur de l'écran et des dimensions des actionneurs non rayonnants 4. C'est ensuite en modulant l'effet à basse fréquence qu'on peut générer différentes sensations comme pour le mode de Lamb. On peut dire que l'on a une texture « grossière » entre 10 et 100 Hz puis plus fine au-dessus de 100 Hz et jusqu'à 1000 Hz. La rugosité perçue dépendant de l'amplitude de vibration. Dans ce cas, les actionneurs ont un comportement non rayonnant, permettant de générer un effet haptique localisé à une fréquence allant de 30 kHz à 1,3 MHz pour des actionneurs 4 entre 3 mm et 2cm de diamètre (fréquence inversement proportionnelle au carré du diamètre de l'actionneur). La plage de fréquences allant de 120 kHz à 480 kHz pour des actionneurs non rayonnants 4 entre 5 mm et 1 cm de diamètre.

### Procédé de génération d'au moins un effet haptique

Dans une première étape la position du ou des doigts de l'utilisateur est détectée (étape E1).

Ensuite, en fonction de l'effet haptique à produire, l'unité de commande génère (étape E2) et envoie (étape E3) un signal de commande adapté à l'actionneur ou aux actionneurs piézoélectriques concernés pour générer un effet par modulation du coefficient de frottement.

Les actionneurs piézoélectriques de Lamb 3 vont recevoir un signal de commande qui va appliquer une différence de potentiel entre leur électrode supérieure et leur électrode inférieure sous forme de signal complexe. Ce signal complexe sera un signal alternatif à une fréquence correspondant au dimensionnement de l'interface et de l'effet à générer.

Puis en actionnant les actionneurs de la matrice d'actionneurs non rayonnants 4, l'interface générera un effet localisé sur sa position uniquement indépendamment ou en même temps que l'effet par modification du coefficient de frottement généré par les actionneurs de Lamb. Chaque actionneur non rayonnant 4 peut être actionné indépendamment et donc peut être actionné de la même façon qu'un autre actionneur ou de façon différente.

Pour un effet comme pour l'autre le critère pour créer l'effet de modification de frottement est qu'il faut une amplitude de vibration d'au moins 1 *µm à* au moins 20 kHz (potentiellement moins d'1 µm si on augmente la fréquence). Pour le mode de Lamb il faut une demi-longueur d'onde au maximum de 1 cm pour être certain que le doigt soit toujours en contact avec un maximum d'amplitude.

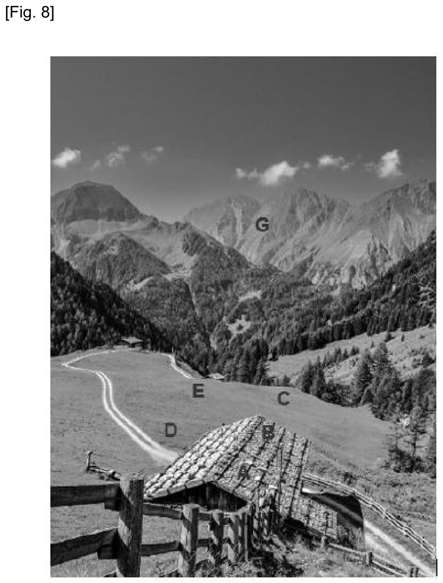

La figure 8 montre une image affichée sur l'interface du présent exposé. Le principe est le suivant, soit un doigt en A et un second doigt en D. Les actionneurs non rayonnant 4 correspondant à la zone A vont être actionnés par un signal basse fréquence et ceux de la zone D un signal plus haute fréquence engendrant un effet lisse. Lorsque le doigt va de A à B les actionneurs non rayonnant 4 et de Lamb 3 peuvent générer un effet par modification du coefficient de frottement avec une modulation de fréquence basse fréquence pour générer un effet rugueux continu. Au contraire lorsque le doigt passe de D à E, les actionneurs de Lamb 3 peuvent générer un effet par modification du coefficient de frottement avec une modulation de fréquence plus haute en fréquence pour générer un effet lisse continu. Pour passer de B à C les actionneurs non rayonnant 4 peuvent générer des effets différents, en actionnant différemment l'actionneur non rayonnant 4 qui est à proximité de la zone B de celui qui est à proximité de la zone C. En F le signal adressé aux actionneur non rayonnants 4 présentera une fréquence de modulation intermédiaire à celle des points D et A, et en G elle sera légèrement supérieure mais inférieure à celle du point A. Cela permettant de générer des effets plus ou moins rugueux. Le couplage avec l'image renforçant la sensation.

On montre ici que l'on obtient diverses modifications du coefficient de frottement sur l'interface en fonction des différents points de contact.

## Revendications

1. Interface haptique, comprenant :
- une structure haptique (1) définissant une surface tactile susceptible d'être touchée par un utilisateur, la structure haptique (1) comprenant
- une plaque (2) comprenant une surface inférieure (21) et une surface supérieure (22) susceptible d'être touchée par un utilisateur ;
- au moins deux actionneurs piézoélectrique de Lamb (3) configurés pour faire vibrer la plaque (2) à un mode de vibration dit de Lamb, la vibration étant apte à se propager dans la plaque (2) pour faire vibrer la plaque (2) de manière uniforme, la vibration selon un mode de Lamb présentant des zones de vibration maximales et des zones d'amplitude nulle, des lignes nodales étant définies sur la plaque (2) où l'amplitude des vibrations est minimale ;
- une matrice d'actionneurs piézoélectriques non rayonnants (4) couplée à la plaque, chaque actionneur piézoélectrique non rayonnant (4) de la matrice étant configuré pour générer de manière sélective et localisée une déformation de la plaque (2) ;
les actionneurs piézoélectriques non rayonnants (4) étant répartis sur la surface inférieure (21) de la plaque (2) sur des lignes nodales ou antinodales du mode de Lamb généré de manière à ne pas perturber la vibration du mode Lamb;
- une unité de commande (5) configurée pour produire et envoyer des signaux aux actionneurs non rayonnants (4) piézoélectriques et à l'actionneur piézoélectrique de Lamb (3) en fonction d'un effet haptique à obtenir de manière à obtenir un effet haptique par une modulation du coefficient de frottement localisé.

2. Interface haptique selon la revendication 1, dans laquelle la plaque est rectangulaire et les actionneurs piézoélectriques de Lamb (3) sont disposés de part et d'autre de la plaque le long de la largeur de la plaque (2)

3. Interface haptique selon l'une des revendications 1 à 2, dans laquelle les actionneurs piézoélectriques non rayonnants (4) sont répartis sur des lignes nodale, les actionneurs piézoélectriques non rayonnants (4) occupent une surface ayant une largeur prise entre deux ventres de la vibration du mode de Lamb inférieure à une demi-longueur d'onde du mode de vibration de Lamb.

4. Interface haptique selon l'une des revendications 1 à 2, dans laquelle les actionneurs piézoélectriques non rayonnants (4) sont répartis sur la surface inférieure (21) sur des lignes antinodales (LA) du mode de Lamb généré, les actionneurs piézoélectriques non rayonnants (4) présentant une largeur prise dans le sens de propagation de la vibration supérieure ou égale à une demi-longueur d'onde du mode de vibration de Lamb.

5. Interface haptique selon l'une des revendications 1 à 4, dans laquelle deux actionneurs piézoélectriques non rayonnants (4) sont espacés d'une distance supérieure à la taille d'un doigt comprise entre 0,5 et 2 cm bord à bord et d'une distance centre à centre qui est un multiple d'une demi-longueur d'onde.

6. Interface haptique selon l'une des revendications 1 à 5, dans laquelle les actionneurs piézoélectriques non rayonnants (4) sont circulaires ou hexagonaux.

7. Interface haptique selon l'une des revendications 1 à 6, dans laquelle les actionneurs piézoélectriques non rayonnants (4) sont disposés à une distance supérieure ou égale à une demi-longueur d'onde d'un actionneur piézoélectrique de Lamb (3).

8. Procédé pour générer au moins un effet haptique capable d'être ressenti par un utilisateur en contact avec une interface haptique telle que définie par l'une des revendications 1 à 7, comprenant les étapes suivantes :
- détecter (E1) au moins une position d'au moins un contact d'un utilisateur sur la surface (21) de la plaque (2) ;
- envoyer (E2) au moins un signal de commande aux actionneurs piézoélectriques (4) et de Lamb (3) en fonction de la position détectée ou les positions détectées pour faire vibrer de manière uniforme la plaque (2) selon un mode de Lamb et de manière localisée par au moins un actionneur piézoélectrique (4).

9. Procédé selon la revendication 8, la vibration selon un mode de Lamb et la vibration des actionneurs piézoélectriques (4) génèrent une variation du coefficient de frottement perceptible tactilement par un utilisateur déplaçant son doigt sur la surface de la plaque (2).

10. Procédé selon l'une des revendications 8 à 9, dans lequel le signal de commande est configuré pour que la plaque vibre uniformément selon un mode de Lamb a une amplitude supérieure à quelques 100 nm de préférence comprise entre 100nm et 2µm, ou entre 100nm et 1µm.
